Europäisches Patentamt

**European Patent Office**

Office européen des brevets

(19)

(11) Publication number: **0 040 909**
A1

(12) # EUROPEAN PATENT APPLICATION

(21) Application number: **81301695.3**

(51) Int. Cl.³: **F 16 K 31/06**

(22) Date of filing: **16.04.81**

---

(30) Priority: **16.05.80 GB 8016405**

(43) Date of publication of application: **02.12.81**
**Bulletin 81/48**

(84) Designated Contracting States: **BE CH DE FR IT LI**

(71) Applicant: **WESTINGHOUSE BRAKE AND SIGNAL COMPANY LIMITED, Foundry Lane, Chippenham Wiltshire SN15 1RT (GB)**

(72) Inventor: **Langley, Keith William WESTINGHOUSE BRAKES, P.O.B. 74 WESTINGHOUSE BRAKE AND SIGNAL Co. Ltd., Chippenham Wiltshire SN15 1HY (GB)**

(74) Representative: **Page, Edmund John, WESTINGHOUSE BRAKE AND SIGNAL COMPANY LIMITED P.O.Box 85 Foundry Lane, Chippenham Wiltshire SN15 1RT (GB)**

---

(54) **Fluid pressure control valves.**

(57) A fluid pressure control valve in which pressure in a throttle valve (3) is variable by means of an electromagentically biassed pivoted beam (25).

The beam (25) is statically counter-balanced by weights (26) and is supported by a resilient metal strip which allows limited angular movement of the beam (25) about its support.

EP 0 040 909 A1

Fluid Pressure Control Valves

This invention relates to fluid pressure control valves and relates especially to fluid pressure control valves which are suitable for use in installations such as required for braking systems of vehicles and which may be subject to violent mechanical vibrations or shock.

In the Specification of U.K. Patent No. 1,174,243 there is described and claimed a fluid pressure control valve having a restricted flow inlet port and an outlet port, an exhaust port providing a valve seat and a throttle element movable towards and away from the valve seat thereby to effect a varying degree of throttling to the passage of fluid through the valve seat, a cantilever mounted leaf spring, the free end of which is operatively engageable by the throttling element and loading means by which the free end of the leaf spring can be loaded such that in operation of the valve when a fluid pressure of predetermined value pertains at the input port, the value of the fluid pressure pertaining to the output port is dependent upon the rate of escape of fluid through the valve seat which rate is in turn determined by the degree of throttling effected by the throttling element consequent upon the degree of loading of the leaf spring by said loading means.

Control valves such as the foregoing have been found to be sensitive to vibrations and shock when employed

0040909.

in fluid pressure operable braking systems for controlling a braking pressure and a satisfactory solution
has been employed which makes use of an hydraulic damper
to resist deflection of the leaf spring due to such
shocks and vibrations without appreciably affecting
the normal mean deflection due to a steady electromagnetic loading of the leaf spring.

It has been found, however, that with such a damping
system. certain forms of shock can produce undesired
temporary deflection of the leaf spring and the need
to provide seals to contain the damping fluid has
been considered to be a disadvantage owing to the
possibility of eventual leakage.  It is therefore an
object of the present invention to remove or substantially reduce such shortcomings.

According to the present invention, there is provided
a fluid pressure control valve having a restricted
fluid flow inlet port, a vent port provided with a
variable throttle arrangement and a fluid pressure
outlet port connected to a region between the inlet
port and the vent port, the variable throttle arrangement comprising a force-applying means carried to one
side of a support point of a substantially rigid
beam which is resiliently supported for angular movement about said support point and having counter-
balancing mass at the other side thereof to render
the valve substantially insensitive to shock forces
acting through said support point.

In order that the invention may be more clearly understood and readily carried into effect, the same will
be further described by way of example with reference
to the accompanying drawing of which -

Fig. 1 illustrates in diagrammatical form an electro-
pneumatic converter valve embodying the present invention; and

Fig. 2 illustrates the manner of resiliently
supporting the beam of the device for angular
movement.

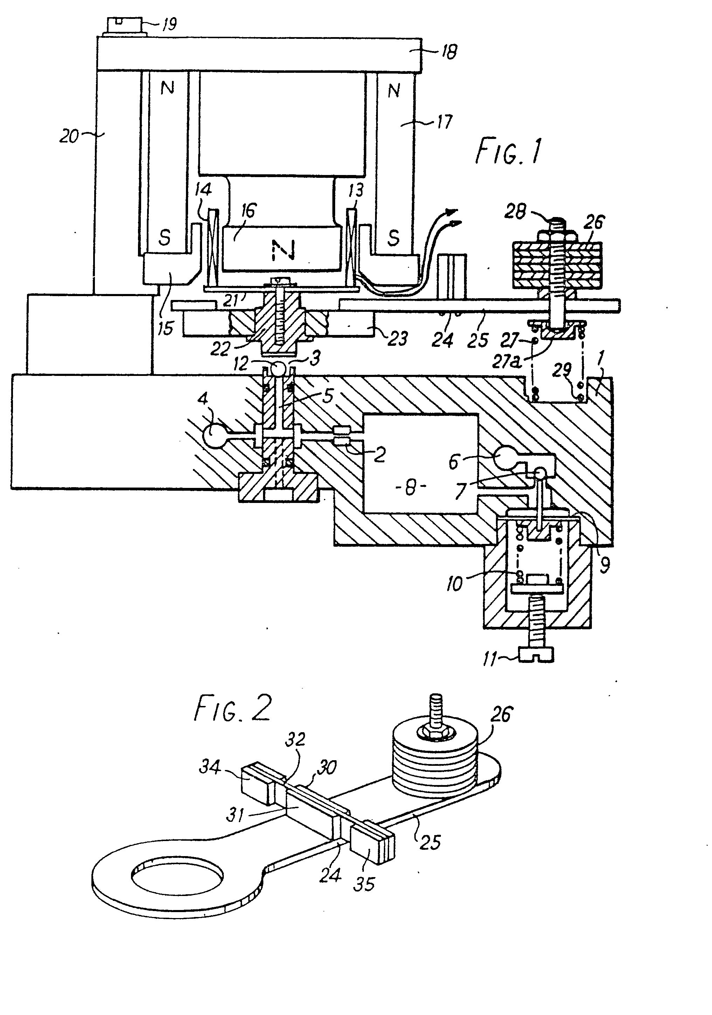

In Fig. 1 is shown a block 1 which houses the
pneumatic parts of the electro-pneumatic converter
valve and comprises a pressure input port 2, a vent
port 3 and a fluid pressure output port 4 connected
to a region 5 between the restricted input port 2
and the variably vented port 3. The source of fluid
pressure for the electro-pneumatic converter is
connected at a port 6 from which it is applied via a
pressure regulating valve having a valve closure
member 7 to a chamber 8. Control means for the
pressure-regulating valve 7 comprises a diaphragm 9
adjustably spring-loaded by a spring 10 with
adjustment screw 11. The variable throttle arrangement
for the vent port 3 is provided by virtue of a valve
member 12 in the form of a ball which, in the position
shown, closes the region 5 from atmosphere. The details of the components in block 1 are only shown diagrammatically because this position of the valve is almost identical to the valve described and shown in Fig. 1 of United Kingdom Specification No. 1,174,243.

In order to urge the ball 12 against its seat to close-off the region 5, an electro-magnetically operable loading means is provided, the loading produced by which is dependent upon the current flowing in a cylindrical coil 13 movable axially in an annular space 14 between an annular pole 15 and an inner cylindrical pole 16 of a permanent magnet arrangement. The permanent magnet arrangement comprises a cylindrical permanent magnet 17 clamped between a flange 18 of the central pole piece 16 and the annular pole piece 15 by clamping screws, one of which is shown at 19, through a non magnetic pillar 20. The whole magnetic assembly is thereby mounted on the block 1. The cylindrical coil 13 is wound upon a coil-former 21 carried at its centre on a supporting arrangement comprising a central boss 22 in a non-magnetic support plate 23 carried to one side of the support point 24 of a rigid beam 25. The other side of the beam 25 with respect to the support point 24, carries static counter-balancing weights in the form of washers 26, or the like. Optionally, moreover, a biasing spring 27 can be included beneath the beam 25 and retained between the mounting stud 28 for the counter-balancing weights, on the one hand, and a recess 29 in the upper surface of a base member 1. The bias on the spring

0040909

may be varied by adjustment of the position of a spring follower 27a on one end of the stud 28. This spring is included as such an option in order to modify the operating characteristics of the valve.

The manner of resiliently supporting the beam 25 for angular movement is illustrated in Fig. 2 wherein the beam 25 is shown together with the counter-balancing weights 26. The support point for the beam is fixed to the underside of a pair of blocks 30 and 31 which clamp the middle portion of a strip of spring-metal 32, the ends of which are held in support blocks 34 and 35 which in turn are mounted on the base block 1 of the electro-pneumatic converter. The small amount of angular movement which is required of the beam 25 is thereby permitted by the portions of the spring-material strip 32 between the outer blocks 34 and 35 and the blocks 31 and 32 beneath which the beam is supported. Furthermore, in assembling the device, the counter-weights 26 are adjusted to substantially counter-balance the mass of the coil assembly which is carried at the other side of the beam with reference to the support point 24. Preferably, this balancing is effected before final assembly of the device.

In operation of the electro-pneumatic converter of Fig. 1. fluid pressure is supplied from a reservoir to the port 6 from whence it passes via the valve 7 into the small reservoir 8 provided in the base block of the valve. This pressure acts on the upper- side of the diaphragm 9 and upon reaching a value at
which the spring 10 is sufficiently deflected to permit
closure of the valve 7, the pressure in the reservoir
8 ceases to increase further.   The pressure thus
established in the reservoir 8 is maintained from 6
and communicated via the restricted orifice of input
port 2 to the region 5 with a pressure drop which is
determined by the degree of throttling provided by
the member 12 restricting vent port 3.

Assuming that the device is required to produce an output pressure which is variable in proportion to the
current which is fed to the coil 13. the optional spring
27 will be excluded from the assembly and the sense
of energisation of the coil 13 will be such as to cause
downward urging of the member 12 with increasing
current.   Correspondingly progressively increasing
force on the member 12 therefore progressively increases
the pressure which is necessary to effect unseating
of 12 and this pressure appears as the output pressure
at port 4.

Assuming now that the device is required to operate
as an inverse device or, in braking parlance, in
energise-to-release mode, a suitable spring 27 is
included and, under these conditions, with zero current
applied to the coils 13, the output pressure can
approximate to the predetermined pressure of the
reservoir 8 since there will be negligible pressure
drop via the restriction 2 and the vent valve 3.

With increasing current in the coil 13, the thrust exerted by the spring 27 acting via the beam 25 downwardly on the member 12, is increasingly relieved by increasing current and therefore progressively greater pressure drop occurs across the restriction 2 to produce a progressively reducing pressure in the region 5 which appears at the output port 4.

It will be appreciated that the device operates in the same manner as the above-acknowledged previous device to the extent that the output pressure at the port 4 is the result of sharing of pressure drop of the pressure 8 between the input restrictive port 2 and the variable vent port 3.

The spring 27 exerts through the pivoted beam 25 a downward thrust on ball 12 tending to increase the output pressure at port 4.  In an alternatively modified construction this downward thrust is provided by a twist in the spring strip 32 in the appropriate sense.

If the fluctuations in the pressure of the fluid supply connected to port 6 are relatively small then the pressure-regulating valve 7 comprising diaphragm 9, spring 10 and adjusting screw 11, and the chamber 8 may be omitted in which case port 6 is connected directly to the restricted port 2.

By virtue of the mounting arrangement for the energising coil 13 on one side of the pivot point of a beam resiliently supported for angular movement about the pivot point and the other side of which beam is counter-balanced by the weights 26, vertical disturbances acting on the assembly produce negligible intermittent variations of the force on the member 12 and therefore the output pressure remains unaffected. Since, in railway braking applications, either in locomotives or on rolling stock, it is normally possible to mount the assembly such that whilst it may be subjected to vertical and horizontal shocks from any direction to which it is insensitive, rotational shocks are at least rare if not totally non-existent in normal operation and therefore the electro-pneumatic converter described is extremely reliable for this particular application and will find application in other fields where a reliable electro-pneumatic converter is required which is not susceptible to shocks or vibrations.

- 9 -                    0040909

CLAIMS:

1.  A fluid pressure control valve having a restricted
fluid flow inlet port (2), a vent port (3) provided with a
variable throttle arrangement (12) and a fluid pressure
outlet port (4) connected to a region (5) between
the inlet port (2) and the vent port (3), characterised
by the variable throttle arrangement comprising a force applying means (13, 15, 16) carried to one side of a support
point (24) of a substantially rigid beam (25) which is
resiliently supported (32) for angular movement about said
support point (24) and having a counter-balancing mass
(26) at the other side thereof to render the valve
substantially insensitive to shock forces acting through the
support point.

2.  A fluid pressure control valve according to Claim 1
characterised by said resilient support being provided
by a strip (32) of spring metal fixed at right angles to
said beam (25) and rigidly held at its outer ends so as
to permit limited angular movement of said beam about
said support.

3.  A fluid pressure control valve according to
Claim 1 or Claim 2 characterised by said counter-
balancing mass being in the form of a plurality of easily
removable weights (26).

4.  A fluid pressure valve according to any preceding
claim characterised by having a biassing spring (27)
located between said beam (25) and fixed structure and at the end of the beam (25) where said counter-
balancing weights are located, so as to modify the operating
characteristics of the valve.

5. A fluid pressure valve according to Claim 4
characterised by said biassing spring (27) having means
(27a) to vary its bias.

6. A fluid pressure valve according to any preceding
claim characterised by said force applying means being
in the form of an electromagnetic coil (13) attached
to said beam (25) and located in the field of a
permanent magnet (41, 15).

7. A fluid pressure valve according to claim 6 and
characterised by having the coil (13) so arranged that
increasing current will urge the coil downwardly so
as to increase the pressure on the variable throttle
thereby increasing the pressure at the output port.

8. A fluid pressure valve according to claim 6 and
characterised by having the coil (13) so arranged that
increasing current decreses the pressure on the beam.

9. A fluid pressure valve according to any preceding
claim and characterised by this that it is incorporated
in a railway braking system on a locomotive or on
rolling stock.

0040909

FIG.1

FIG.2

## European Patent Office

## EUROPEAN SEARCH REPORT

| Category | Citation of document with indication, where appropriate, of relevant passages | Relevant to claim |
|---|---|---|
| | DE - C - 1 113 515 (GENERAL CONTROLS)<br>* colomn 3, lines 29 to 39 *<br>-- | 1,4,5,<br>8 |
| | DE - A1 - 2 419 311 (KOEHRING)<br>* page 11, lines 8,9; fig. 1,2 *<br>& US - A - 3 910 314<br>-- | 1 |
| | DE - A - 1 903 176 (LUCAS)<br>* page 4, lines 6 to 27; fig. 2 *<br>& US - A- 3 621 863<br>-- | 1 |
| | DE - C - 1 029 207 (RECHERCHES ETUDES PRODUCTION)<br>* claim 1 *<br>-- | 1 |
| A | DE - A1 - 2 701 434 (DE LAVAL TURBINE)<br>& US - A - 4 053 137<br>-- | |
| A | US - A - 3 532 121 (STURMAN et al.)<br>-- | |
| A | US - A - 2 675 508 (RAY)<br>-- | |
| D | GB - A - 1 174 243 (WESTINGHOUSE)<br>---- | |

**CLASSIFICATION OF THE APPLICATION (Int. Cl.³)**

F 16 K 31/06

**TECHNICAL FIELDS SEARCHED (Int. Cl.³)**

F 16 K 31/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 24-06-1981 | SCHLABBACH |

EPO Form 1503.1   06.78